# EUROPÄISCHE PATENTSCHRIFT

(11) **EP 0 729 967 B1**
(45) Veröffentlichungstag und Bekanntmachung des Hinweises auf die Patenterteilung: **12.08.1998**
(21) Anmeldenummer: 95102196.3
(22) Anmeldetag: 17.02.1995
(51) Int. Cl.: C07F 17/00, C07F 17/02

(54) **Verfahren zur Herstellung von Übergangsmetallkomplexen mit 1,3-disubstituierten Cyclopentadienyl-Liganden**
Process for the preparation of transition metal complexes with 1,3-disubstituted cyclopentadienyl ligands
Procédé de préparation de complexes de métaux de transistion avec des ligands cyclopentadiènyliques 1,3-disubstitués

(43) Veröffentlichungstag der Anmeldung: 04.09.1996
(73) Patentinhaber: Witco GmbH, 59192 Bergkamen (DE)
(72) Erfinder: Lisowsky, Richard, Dr., D-59174 Kamen (DE)

(56) Entgegenhaltungen:
- EP-A- 0 283 739
- US-A- 5 200 537
- US-A- 5 336 795

## Beschreibung

Die Erfindung betrifft ein verbessertes Verfahren, das ausgehend von in 3-Stellung substituierten-2-cyclopenten-1-onen in hohen Ausbeuten 1,3-disubstituierten Cyclopentadiene liefert, welche metalliert und zu den entsprechenden 1,3-disubstituierten Cyclopentadienyl-Übergangsmetallkomplexen umgesetzt werden.

Aufgrund der vielfältigen Anwendungsmöglichkeiten obengenannter Übergangsmetallkomplexe als Katalysatoren in der organischen Synthese sowie insbesondere in der Polymerisation von Olefinen ist die effiziente technische Herstellbarkeit von an den Cyclopentadienylresten disubstituierten Sandwichkomplexen in zunehmendem Maße wichtig geworden (EP-A-0 128 045, EP-A-0 366 290, EP-A-0 283 739, EP-0 582 480, US-PS 4 874 880).

Die Herstellung solcher Verbindungen ist im Prinzip bekannt. Dazu kann allgemein nach der Gleichung 1 vorgegangen werden: 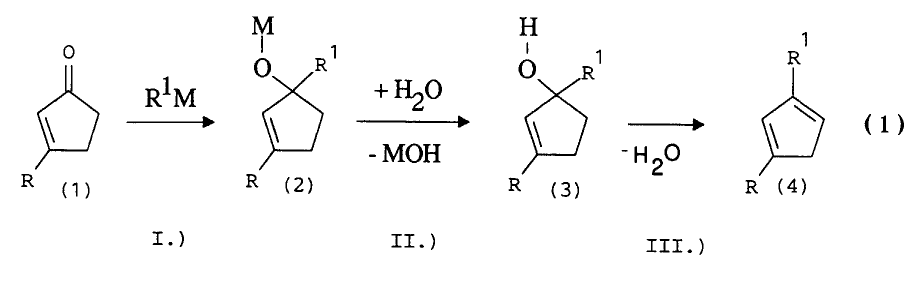 worin
M = Li, MgCl, MgBr,.
R, R¹ (gleich oder verschieden) = Alkyl- oder Arylreste sein können.

Nachteilig dabei war bisher, daß nach der Umsetzung von 3-Alkyl-cyclopenten-1-onen mit Grignard-Verbindungen oder Lithiumalkylen das entstehende Alkoholat (2) erst mittels Wasser hydrolisiert und als Alkohol (3) isoliert werden mußte, bevor dann nach separater katalytischer Dehydratisierung und Aufarbeitung die 1,3-disubstituierten Cyclopentadien-Komponente (4) erhalten wurde, welche erst nach separater Trocknung für die weitere Umsetzung eingesetzt werden konnten (Tetrahedron 1965, 21, 2313; Chem. Ber. 1976, 109, 329; J. Organomet. Chem., 1991, 417, 9).

Aufgabe der Erfindung war es daher, die Reaktionen I., II. und III. (Gleichung 1) soweit zu vereinfachen, daß ein Verfahren zur Verfügung steht, das es erlaubt, in einer Reaktion ohne Isolierung der Zwischenstufen, in hohen Ausbeuten 1,3-disubstituierte Cyclopentadiene zu synthetisieren, die dann zu den entsprechenden Übergangsmetallkomplexen umgesetzt werden können, z. B. nach Gleichung 2: 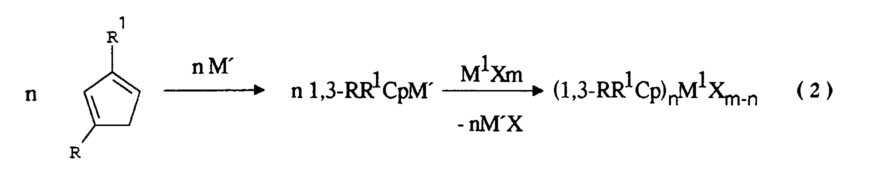
- M' =: Metallierungsmittel
- M¹ =: Übergangsmetall
- X =: Cl, Br, J
- m =: Oxidationszahl von M¹
- n ≤: m

Überraschenderweise wurde nun gefunden, daß obige Reaktion (Gleichung 1) zur Darstellung von 1,3-disubstituierten Cyclopentadienen insbesondere bei dem Einsatz von Grignard-verbindungen die Bildung des Alkohols und die Dehydratisierung vorteilhafterweise in situ ohne Zwischenisolierungen gestattet.

Weiterhin dient das dabei anfallende Magnesiumsalz gleichzeitig als Trocknungsmittel und gestattet somit den sofortigen Einsatz der erhaltenen Lösung zur Darstellung von 1,3-disubstituierten 1,3-Dialkylcyclopentadienylübergangsmetallkomplexen, da aufgrund der wasserfrei anfallenden Lösung an 1,3-disubstituierten Cyclopentadien diese sofort mit feuchtigkeitsempfindlichen Metallierungsagenzien (Na, NaH, Li-Alkyle) versetzt, in 1,3-RR¹CpM' überführt und dann nach üblichen Verfahren mit Übergangsmetallsalzen zur Reaktion gebracht werden kann (Gleichung 3): 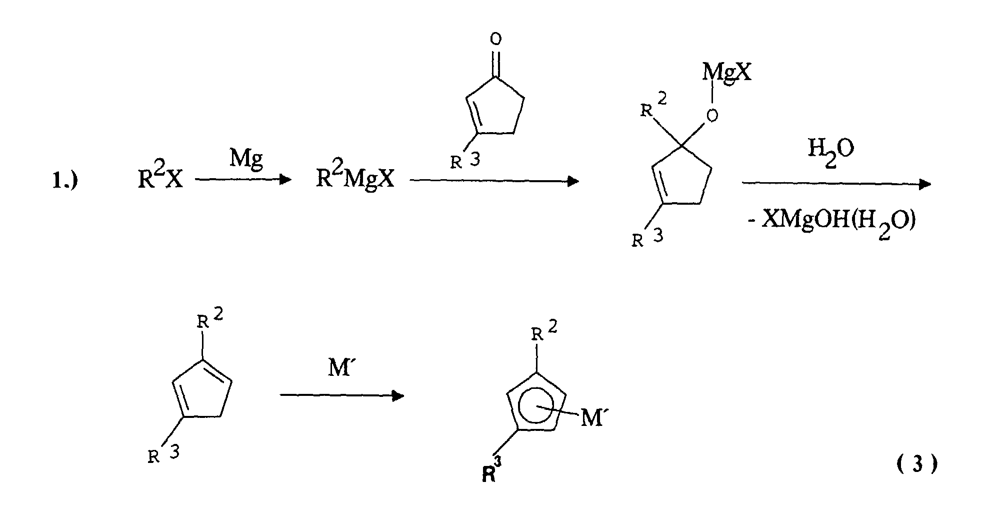 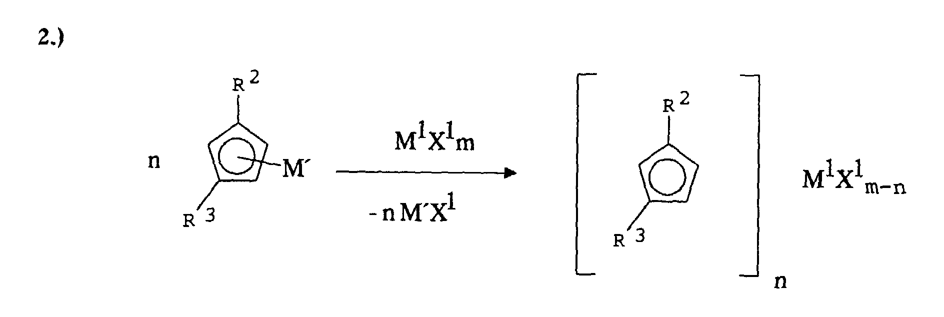 mit
- R², R³ =: unabhängig voneinander C₁-C₂₀, gegebenenfalls substituierte Alkyl-, Alkenyl-Cycloalkyl-, Aryl- Arylalkylreste,
- X =: Cl, Br, J
- M' =: Metallierungsmittel wie Li, Na, K, NaH, KH, Li-Alkyle
- M¹ =: Sc, Ti, Zr, Hf, Fe, V, Cr
- X¹ =: Cl, Br, J
- m =: Oxidationszahl von M¹
- n ≤: m.

Die erfindungsgemäße Reaktionsführung gemäß Gleichung 3 ist bei den Verfahren nach Stand der Technik nicht möglich, da der nach Gleichung 1, Stufe II, hergestellte Alkohol erst isoliert und anschließend gemäß Gleichung 2, Stufe III, separat dehydratisiert und das bei dieser Reaktion freiwerdende Wasser vollständig entfernt werden muß, bevor die weitere Umsetzung nach Gleichung 2 zu den Übergangsmetallkomplexen durchgeführt werden kann.

Gegenstand der Erfindung ist ein Verfahren zur Herstellung von 1,3-disubstituierten Cyclopentadienyl-Übergangsmetallkomplexen, welches dadurch gekennzeichnet ist, daß in erster Stufe in 3-Stellung substituierte Cyclopent-2-en-1-one mit Grignardverbindungen gemäß Gleichung (A) 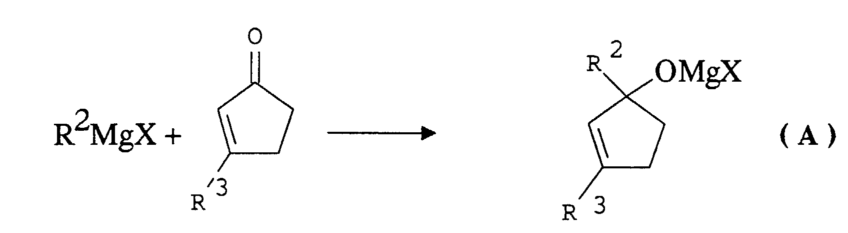 und die gebildeten Alkoholate mit stöchiometrischen Mengen Wasser in einem Schritt nach Gleichung (B) hydrolisiert und dehydratisiert 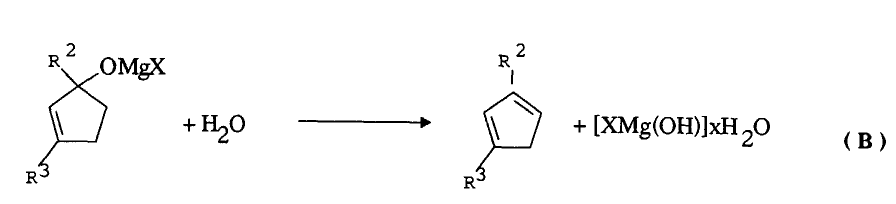 mit
- R², R³: unabhängig voneinander C₁-C₂₀, gegebenenfalls substituierte Alkyl-, Alkenyl- Cycloalkyl-, Aryl-Arylalkylreste,
- X =: Cl, Br, J
und in zweiter Stufe nach an sich bekannten Verfahren direkt, das heißt ohne vorherige Isolierung, nach Gleichung (C) 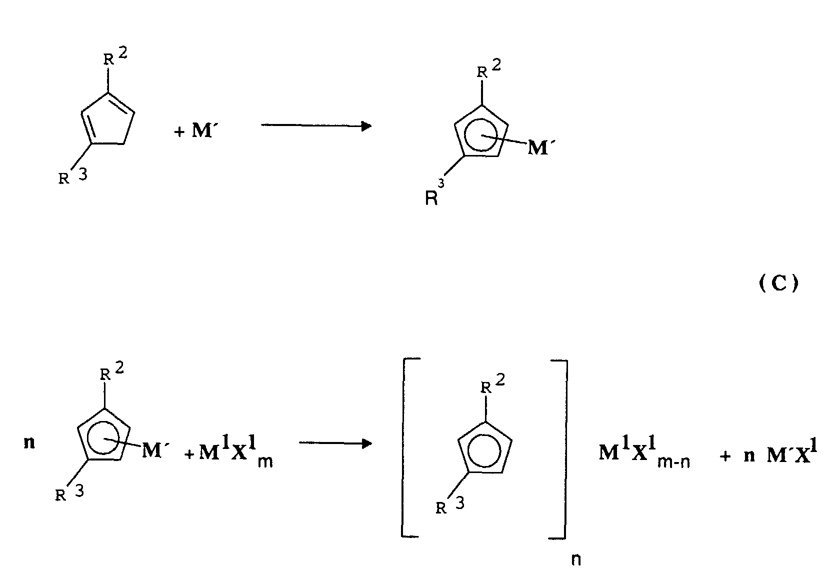 mit
- M' =: Metallierungsmittel
- M¹ =: Sc, Ti, Zr, Hf, Fe, V, Cr
- X¹ =: Cl, Br, J
- m =: Oxidationszahl von M¹
- n ≤: m
metalliert und mit Übergangsmetallhalogeniden zu den entsprechenden Komplexen umgesetzt werden.

Weitere Gegenstände der Erfindung sind durch die Ansprüche gekennzeichnet.

Die gemäß Gleichung (A) mitverwendeten Grignard-Verbindungen R²MgX sind handelsübliche Produkte oder können nach den allgemein bekannten Verfahren hergestellt werden durch Umsetzung der entsprechenden Organochlor-, Organobrom- oder Organojod-Verbindungen mit metallischem Magnesium wie z. B. beschrieben in Houben-Weyl, Band XII/2 a - Metallorganische Verbindungen Be, Mg, Ca, Sr, Ba, Zn, Cd; S. 47 - Organomagnesiumverbindungen - Georg Thieme Verlag Stuttgart - 1973.

Bevorzugt werden Verbindungen R²MgX eingesetzt, in denen R² ein gegebenenfalls substituierter Alkylrest oder Cycloalkylrest mit 1 - 20 C-Atomen ist.

Die erfindungsgemäß mitverwendeten, in 3-Stellung substituierten Cyclopent-2-en-1-one sind herstellbar nach literaturbekannten Verfahren (J. Chem. Soc., 1952, 1127; OS 23 13 504; Tetrahedron Lett., 1965, 21, 2313; Synthesis, 1972, 397; Bull. Soc. Chem., 1970, 2981). Die Reste R³ sind gegebenenfalls substituierte Alkyl-, Alkenyl-, Cycloalkyl-, Aryl- oder Arylalkylreste mit 1 - 20 C-Atomen, wobei erfindungsgemäß Verbindungen, worin R³ der Methyl- oder Phenylrest ist, besonders bevorzugt werden.

Die Umsetzung der Grignardverbindungen mit den in 3-Stellung substituierten Cyclopent-2-en-1-onen wird bevorzugt im Molverhältnis 1 : 1 in Ethern, vorzugsweise in Diethylether, tert. Butyl-methylether und insbesondere Tetrahydrofuran bei Temperaturen von -20 bis 120 °C, vorzugsweise 0 bis 70 °C, durchgeführt.

Zu der etherischen Lösung der Grignardverbindung wird die Cyclopentenonverbindungen gegebenenenfalls in Ether gelöst, kontinuierlich oder portionsweise zudosiert und die Reaktionsmischung nach beendeter Zugabe noch ca. 1 - 3 h weitergeführt.

Nach beendeter Reaktion wird bei Raumtemperatur das gebildete Magnesiumalkoholat durch Zugabe von stöchiometrischer Menge Wasser hydrolisiert. Die Vervollständigung der in einem Schritt stattfindenden Hydrolyse und Dehydratisierung erfolgt abschließend bei erhöhten Temperaturen von ca. 20 - 100 °C, vorzugsweise bei ca. 70 °C, während 1 - 3 h.

Das gebildete Magnesiumsalz bindet vollständig das in der Reaktionsmischung enthaltene Wasser, so daß nach Abkühlung auf Raumtemperatur und Abtrennung des ausgefallenen Magnesiumsalzes eine klare, feststoff- und wasserfreie Lösung vorliegt, welche direkt zur Umsetzung mit einem Metallierungsagenz eingesetzt und danach mit einem Übergangsmetallhalogenid nach Gleichung (C) zu den entsprechenden Übergangsmetallkomplexen umgesetzt werden kann.

Diese Umsetzung erfolgt nach allgemein bekannten Verfahren wie beispielsweise beschrieben in "Chemistry of organozirconium and -hafnium compounds", D. J. Cardin, M. F. Lappert, C. L. Raston; 1986, Ellis Horwood Limited; "Organometallic Chemistry of Titanium, Zirconium, and Hafnium" 1974 - Academic Press New York and London, P. C. Wailes, R. S. P. Coutts, H. Weigold; Gmelin - Handbuch der anorganischen Chemie - Supplement to 8th edition - Volumes 10 and 11, "Zirconium- und Hafnium organische Verbindungen", S. 26 ff - Verlag Chemie, Weinheim - 1973.

### Beispiele

### 1. Darstellung von Bis(1-methyl-3-octylcyclopentadienyl)zirkondichlorid

Es wurden 17.26 g (0.71 mol) Magnesiumspäne in 30 ml Tetrahydrofuran (THF) vorgelegt und mit 2 g Octylbromid versetzt, um die Grignard-Reaktion zu starten. Nach Anspringen des Grignards wurde das restliche Octylbromid (insgesamt 115.9 g; 0.6 mol) gelöst in 70 ml THF, so zudosiert, daß sich gelinder Rückfluß einstellte.

Nach beendeter Zugabe wurde noch 2 h unter Rückfluß nachreagieren gelassen.

Dann wurde auf 0 °C abgekühlt und bei dieser Temperatur das 3-Methyl-2-cyclopenten-1-on (0.5 mol, 48.1 g), gelöst in 20 ml THF und 80 ml Hexan, zugegeben.

Nach Zudosierung wurde 3 h bei Raumtemperatur (RT) nachreagieren gelassen.

Es folgte bei RT Zugabe von 170 ml Hexan und einer zur Hydrolyse nötigen, stöchiometrischen Menge an Wasser (0.6 mol, 10.8 g).

Nach beendeter Zugabe wurde noch 2 h refluxiert, anschließend auf RT abgekühlt und das Magnesiumsalz entfernt. Das klare, feststofffreie Filtrat wurde vorgelegt und mit Butyllithium (2.5 molar in Hexan, 0.4 mol, 160 ml) bei RT innerhalb von 30 min versetzt. Es wurde 1 h bei 50 °C nachgerührt.

Dann wurden 46.6 g Zirkontetrachlorid (0.2 mol) bei 0 °C zugegeben, 1 h bei RT und 2 h unter Rückfluß gerührt.

Es wurde anschließend das ausgefallene LiCl abgetrennt und das Lösungsmittel abdestilliert.

Der verbliebene Rückstand wurde aus Hexan umkristallisiert.
Man erhielt 77.4 g Produkt (Ausbeute: 71 %)
Zr (ber.: 16.74) gef.: 16.9
Cl (ber.: 13.02) gef.: 13.3
¹H-NMR: (CDCl₃)
6.1 - 5.8 (m, 6 H, Cp); 2.6 - 2.35 (m, 4 H, -CH₂-); 2.2 (s, 6 H, -CH₃);
1.6 - 1.1 (m, 24 H, -(CH₂)₆-); 0.85 (t, 6 H, -CH₃)

### 2. Darstellung von Bis(1-i-butyl-3-methylcyclopentadienyl)zirkondichlorid

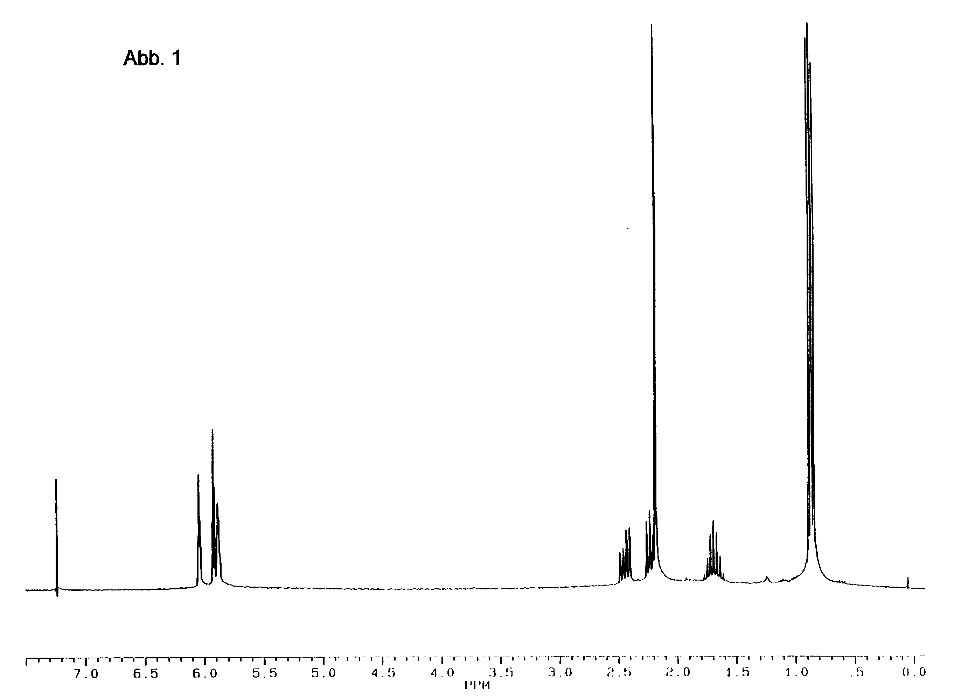

Durchführung und Einsatzstoffe wie in 1.); nur anstelle des Octylbromids wurden 0.6 mol i-Butylchlorid eingesetzt. Man erhielt 61.4 g Produkt (Ausbeute: 71 %)
Zr (ber.: 21.1) gef.: 20.8
Cl (ber.: 16.4) gef.: 16.1
¹H-NMR: (CDCl₃)
(siehe Abb. 1)

### 3.a) Darstellung von Bis(1-n-butyl-3-methylcyclopentadienyl)zirkondichlorid

Durchführung und Einsatzstoffe wie in 1.); anstelle von Octylbromid wurden 0.6 mol n-Butylchlorid eingesetzt. Man erhielt 67.5 g Produkt (Ausbeute: 78 %)
Zr (ber.: 21.1) gef.: 20.7
Cl (ber.: 16.4) gef.: 16.1
¹H-NMR: (CDCl₃)
6.1 - 5.9 (m, 6 H, Cp); 2.65 - 2.38 (m, 4 H, -CH₂-); 2.2 (s, 6 H, -CH₃);
1.6 - 1.25 (m, 8 H, -CH₂CH₂-); 0.9 (t, 6 H, -CH₃)

### 3.b) Darstellung von Bis(1-n-butyl-3-methylcyclopentadienyl)zirkondichlorid mit Isolierung der Zwischenstufe 1-n-Butyl-3-methylcyclopentadien

19.44 g Magnesiumspäne (0.8 mol) wurden in 40 ml THF vorgelegt und mit 1 g n-Butylchlorid versetzt, um die Grignard-Reaktion zu starten.

Nach Anspringen der Grignard-Reaktion wurden weitere 63.8 g n-Butylchlorid (insgesamt 0.7 mol), gelöst in 150 ml Tetrahydrofuran, so zugetropft, daß sich gelinder Rückfluß einstellte.

Nach beendeter Zugabe wurde noch 2 h unter Rückfluß nachreagiert. Dann wurde auf 0 °C gekühlt und 67.3 g 3-Metyl-2-cyclopenten-1-on (0.7 mol), gelöst in 40 ml Tetrahydrofuran und 140 ml Hexan, zudosiert.

Anschließend wurde bei RT noch 2 h gerührt.
Dann wurden 200 ml Hexan bei RT zugegeben sowie 12.6 g (0.7 mol) H₂O langsam zudosiert.

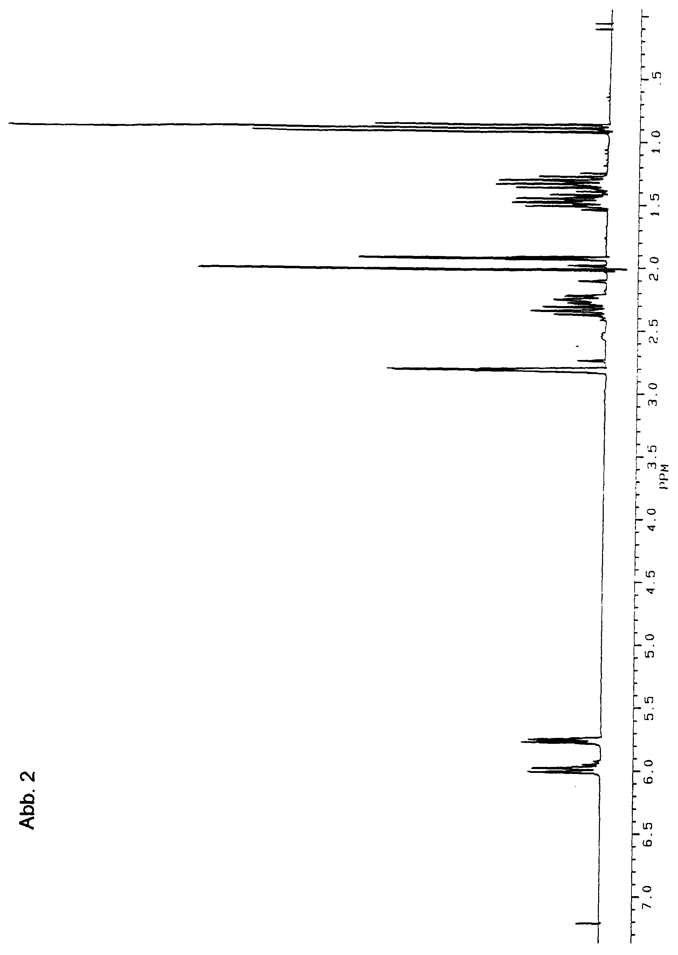

Nach der Zugabe des Wassers wurde noch 1 h refluxiert. Nach Abkühlen auf RT wurden die ausgefallenen Magnesiumsalze abgetrennt und das Filtrat vom Lösungsmittel befreit. Der nach Abziehen des Lösungsmittels verbliebene Rückstand wurde mittels ¹H-NMR untersucht und zeigte keinerlei Rest an nicht dehydratisiertem Alkohol, 1-n-Butyl-3-methylcyclopent-2-en-1-ol [siehe Abbildung 2.) und vergleiche dazu auch Umsetzung mit n-Butyllithium anstelle von n-Butylgrignard - 4.) Vergleichsbeispiel zu 3.b)] Der Rückstand wurde dann bei 45 °C/mbar destilliert. Man erhielt 85 g Destillat.

70 g des Destillats wurden in 200 ml Pentan und 26 ml Tetrahydrofuran vorgelegt und bei RT tropfenweise mit 146 ml Butyllithium (2.5 molar in Hexan; 0.365 mol) versetzt. Nach Zugabe des Butyllithiums wurde noch 30 min refluxiert. In die auf 0 °C gekühlte Reaktionsmischung wurden 42.5 g (0.183 mol) Zirkontetrachlorid eingetragen. Danach wurde noch 1 h refluxiert.

Nach Abkühlen auf RT wurde das ausgefallene LiCl abgetrennt und das Filtrat auf -20 °C gekühlt. Das ausgefallene Produkt wurde abfiltriert und getrocknet.
Man erhielt 65.5 g Produkt (83 % d. Th.)
¹H-NMR identisch mit dem in Beispiel 3.a)

### 4. Vergleichsbeispiel zu 3.b): anstelle von Grignard wurde Butyllithium eingesetzt

41.6 ml Butyllithium (2.5 molar in Hexan; 104 mmol) wurden bei -10 °C vorgelegt.

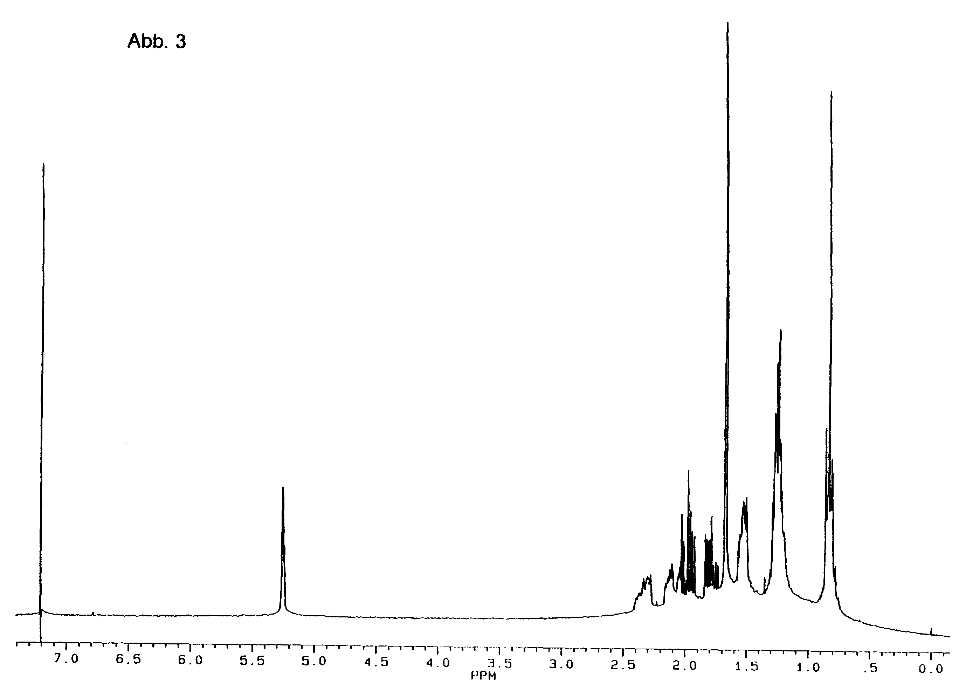

Innerhalb von 45 min wurde eine Mischung aus 27 ml Hexan, 9 ml THF und 10 g 3-Methyl-2-cyclopenten-1-on (0.104 mol) zugetropft. Nach beendeter Zugabe wurde bei RT 4 h gerührt. Dann wurden 1.87 g Wasser (0.104 mol) zugetropft, 1 h bei RT und 1 h unter Rückfluß gerührt, abgekühlt und filtriert. Das Filtrat wurde vom Lösungsmittel befreit und mittel ¹H-NMR untersucht. Es konnte nur der reine Alkohol 1-n-Butyl-3-methyl-cyclopent-2-en-1-ol nachgewiesen werden.
¹H-NMR (CDCl₃): (siehe Abbildung 3.)
Es war nicht zur Dehyratisierung und damit nicht zur Bildung des 1-Butyl-3-methyl-cyclopentadiens gekommen.

### 5. Darstellung von Bis(1-ethyl-3-methylcyclopentadienyl)zirkondichlorid

Durchführung und Einsatzstoffe wie in 1.); anstelle von Octylbromid wurden 0.6 mol Ethylbromid eingesetzt.
Man erhielt 51,2 g Produkt (Ausbeute: 68 %)
Zr (ber.: 24.23) gef.: 23,5
Cl (ber.: 18.83): gef.: 18.6
¹H-NMR: (CDCl₃) :
6.1 - 5.9 (m, 6 H, Cp); 2.72 - 2.49 (m, 4 H, CH₂-); 2.2 (s, 6 H, -CH₃);
1.15 (d, 6 H, -CH₃)

## Patentansprüche

1. Verfahren zur Herstellung von 1,3-disubstituierten Cyclopentadienyl-Übergangsmetallkomplexen, dadurch gekennzeichnet, daß in erster Stufe in 3-Stellung substituierte Cyclopent-2-en-1-one mit Grignardverbindungen gemäß Gleichung (A) 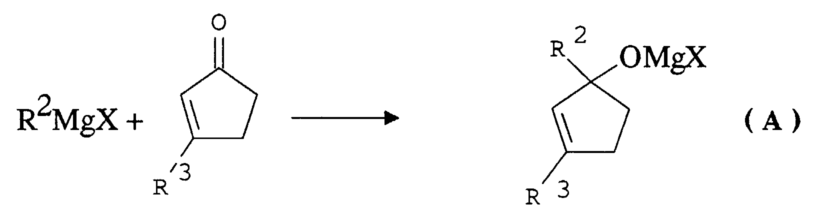 und die gebildeten Alkoholate mit stöchiometrischen Mengen Wasser in einem Schritt nach Gleichung (B) hydrolisiert und dehydratisiert 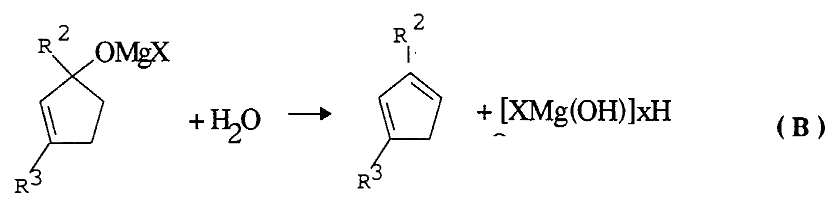 mit
R², R³ unabhängig voneinander C₁-C₂₀, gegebenenfalls substituierte Alkyl-, Alkenyl- Cycloalkyl-, Aryl-, Arylalkylreste,
X = Cl, Br, J
und in zweiter Stufe nach an sich bekannten Verfahren, ohne vorherige Isolierung, nach Gleichung (C) 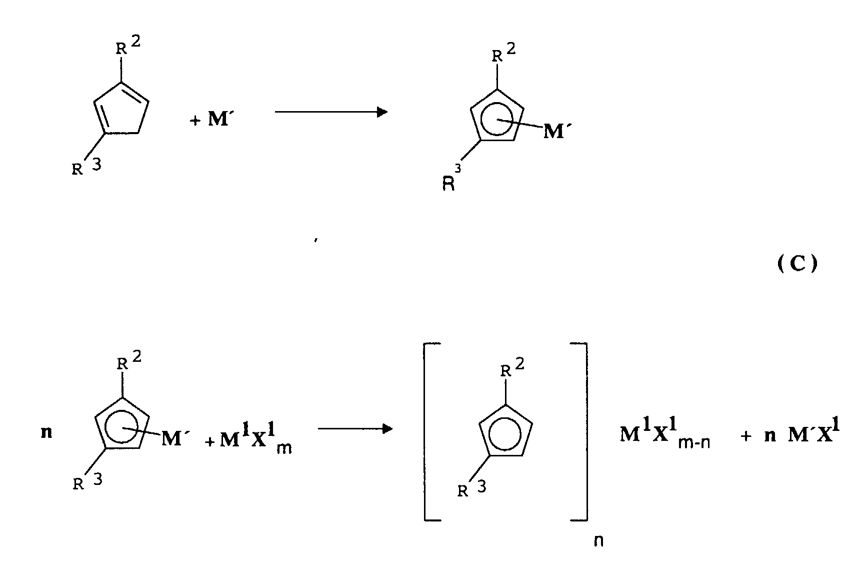 mit
M' = Metallierungsmittel
M¹ = Sc, Ti, Zr, Hf, Fe, V, Cr
X¹ = Cl, Br, J
m = Oxidationszahl von M¹
n ≤ m
metalliert und mit Übergangsmetallhalogeniden zu den entsprechenden Komplexen umgesetzt werden.

2. Verfahren zur Herstellung von 1,3-disubstituierten Cyclopentadienyl-Übergangsmetallkomplexen gemäß Anspruch 1, dadurch gekennzeichnet, daß als Grignard-Verbindungen R²MgX Verbindungen eingesetzt werden, in denen R² ein n-Butyl-, i-Butyl-, n-Octyl-Rest ist.

3. Verfahren zur Herstellung von 1,3-disubstituierten Cyclopentadienyl-Übergangsmetallkomplexen gemäß Anspruch 1, dadurch gekennzeichnet, daß als substituierte Cyclopent-2-en-1-on-Verbindungen solche eingesetzt werden, in denen R³ ein Methyl- oder Phenyl-Rest ist.

4. Verfahren zur Herstellung von 1,3-disubstituierten Cyclopentadienyl-Übergangsmetallkomplexen gemäß Anspruch 1, dadurch gekennzeichnet, daß die Grignard-Verbindung R²MgX in Gleichung (A) in Tetrahydrofuran als Lösungsmittel eingesetzt wird.

5. Verfahren zur Herstellung von 1,3-disubstituierten Cyclopentadienyl-Übergangsmetallkomplexen gemäß Anspruch 1, dadurch gekennzeichnet, daß die Reaktion (B) in einem Verhältnis von Hexan und/oder Pentan : Ether = 1 : 1 bis 4 : 1 durchgeführt wird.

6. Verfahren zur Herstellung von 1,3-disubstituierten Cyclopentadienyl-Übergangsmetallkomplexen gemäß Anspruch 1, dadurch gekennzeichnet, daß das gemäß Reaktion (B) erhaltene Cyclopentadienderivat CpR²R³, vor der weiteren Umsetzung isoliert wird.

## Claims

1. Process for preparing 1,3-disubstituted cyclopentadienyl-transition metal complexes, characterized in that, in a first stage, cyclopent-2-en-1-ones substituted in the 3 position are reacted with Grignard compounds according to equation (A) 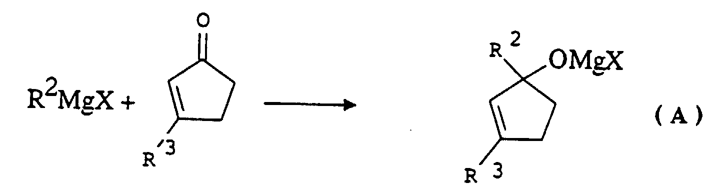 and the alkoxides formed are hydrolysed with stoichiometric amounts of water and dehydrated in a step according to equation (B) 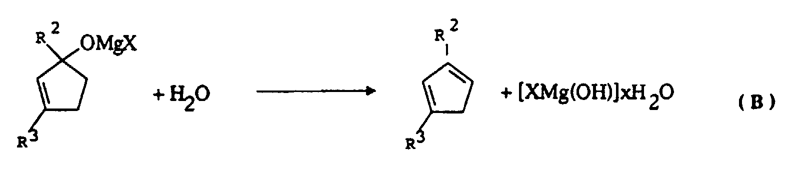 where
R², R³ are, independently of one another, C₁-C₂₀, substituted or unsubstituted alkyl, alkenyl cycloalkyl, aryl, arylalkyl radicals,
X = Cl, Br, I
and, in a second stage, without prior isolation, metallated and reacted with transition metal halides by methods known per se according to equation (C) 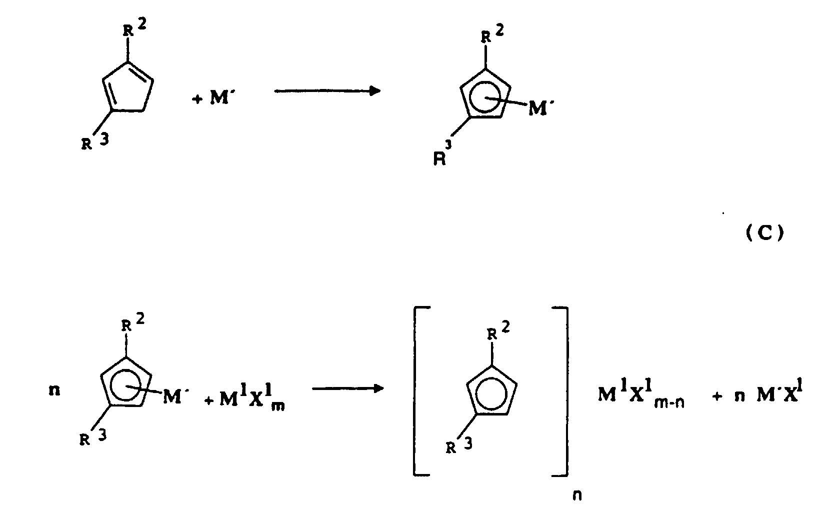 where
M' = metallating agent
M¹ = Sc, Ti, Zr, Hf, Fe, V, Cr
X¹ = Cl, Br, I
m = oxidation state of M¹
n ≤ m
to give the corresponding complexes.

2. Process for preparing 1,3-disubstituted cyclopentadienyl-transition metal complexes according to Claim 1, characterized in that the Grignard compounds R²MgX used are compounds in which R² is an n-butyl, i-butyl, n-octyl radical.

3. Process for preparing 1,3-disubstituted cyclopentadienyl-transition metal complexes according to Claim 1, characterized in that the substituted cyclopent-2-en-1-one compounds used are ones in which R³ is a methyl or phenyl radical.

4. Process for preparing 1,3-disubstituted cyclopentadienyl-transition metal complexes according to Claim 1, characterized in that the Grignard compound R²MgX in equation (A) is used in tetrahydrofuran as solvent.

5. Process for preparing 1,3-disubstituted cyclopentadienyl-transition metal complexes according to Claim 1, characterized in that the reaction (B) is carried out in a ratio of hexane and/or pentane:ether = 1:1 to 4:1.

6. Process for preparing 1,3-disubstituted cyclopentadienyl-transition metal complexes according to Claim 1, characterized in that the cyclopentadiene derivative CpR²R³ obtained according to reaction (B) is isolated before the further reaction.

## Revendications

1. Procédé de fabrication de complexes de métaux de transition avec des cyclopentadiényles 1,3-disubstitués, caractérisé en ce que, dans une première étape, on fait réagir du cyclopent-2-én-1-one substitué en position 3 avec des composés de Grignard selon l'équation (A) 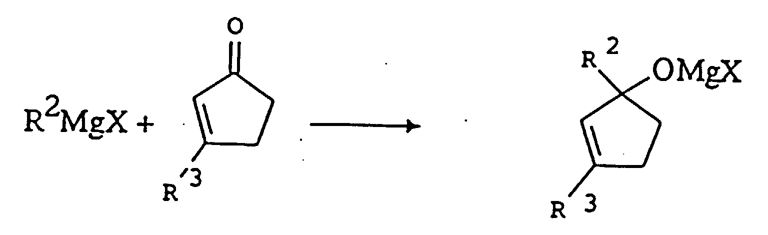 on hydrolyse et on déshydrate les alcoolates formés avec des quantités stoechiométriques d'eau en une phase selon l'équation (B) 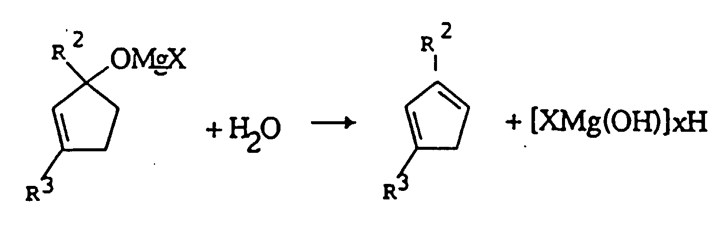 dans laquelle
R², R³ sont, indépendamment l'un de l'autre, des radicaux alkyle, alcényle, cycloalkyle, aryle, arylalkyle en C₁-C₂₀, éventuellement substitués,
X est Cl, Br, I,
et, dans une seconde étape, selon des procédés connus en soi, sans isolement préalable, on les métallise selon l'équation (C) 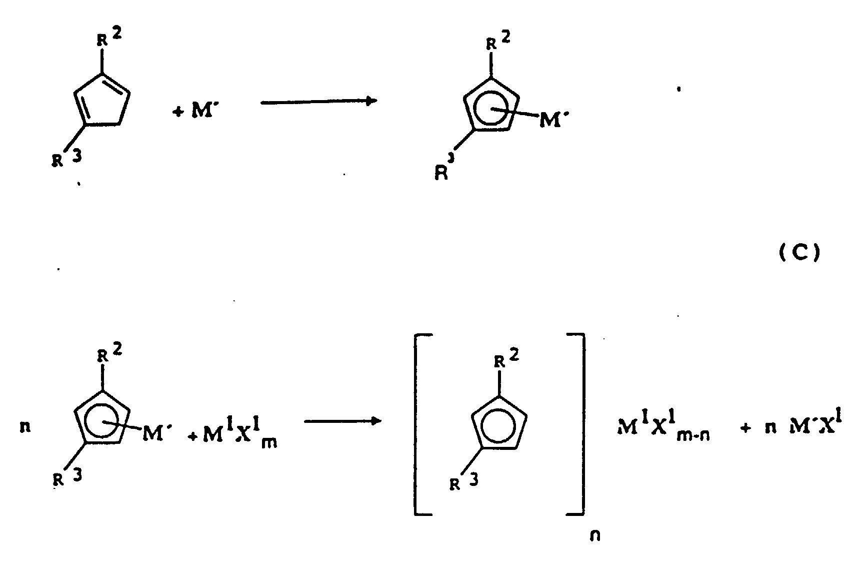 dans laquelle
M' est un agent de métallisation,
M¹ est Sc, Ti, Zr, Hf, Fe, V, Cr,
m est l'indice d'oxydation de M¹,
n ≤ m,
et on les fait réagir avec des halogénures de métaux de transition pour obtenir les complexes correspondants.

2. Procédé de fabrication de complexes de métaux de transition avec des cyclopentadiényles 1,3-disubtitués selon la revendication 1, caractérisé en ce qu'on utilise comme composés de Grignard des composés R²MgX dans lesquels R² est un radical n-butyle-, i-butyle- ou n-octyle-.

3. Procédé de fabrication de complexes de métaux de transition avec des cyclopentadiényles 1,3-disubstitués selon la revendication 1, caractérisé en ce qu'on utilise comme composés de cyclopent-2-én-1-one substitués des composés de ce type dans lesquels R₃ est un radical méthyle ou phényle.

4. Procédé de fabrication de complexes de métaux de transition avec des cyclopentadiényles 1,3-disubstitués selon la revendication 1, caractérisé en ce que le composé de Grignard R²MgX de l'équation (A) est utilisé dans du tétrahydrofuranne comme solvant.

5. Procédé de fabrication de complexes de métaux de transition avec des cyclopentadiényles 1,3-disubstitués selon la revendication 1, caractérisé en ce que la réaction (B) est réalisée dans un rapport hexane et/ou pentane à éther de 1:1 à 4:1.

6. Procédé de fabrication de complexes de métaux de transition avec des cyclopentadiényles 1,3-disubstitués selon la revendication 1, caractérisé en ce que le dérivé de cyclopentadiényle CpR²R³ obtenu par la réaction (B) est isolé avant l'autre réaction.
